## Europäisches Patentamt
## European Patent Office
## Office européen des brevets

(19)

(11) **EP 1 211 099 A2**

(12) **EUROPÄISCHE PATENTANMELDUNG**

(43) Veröffentlichungstag:
**05.06.2002 Patentblatt 2002/23**

(51) Int Cl.⁷: **B42C 19/02**

(21) Anmeldenummer: **01128521.0**

(22) Anmeldetag: **29.11.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **04.12.2000 US 729302**

(71) Anmelder: **Heidelberger Druckmaschinen Aktiengesellschaft**
**69115 Heidelberg (DE)**

(72) Erfinder: **Hansen, David Robert**
**Honeoye Falls, NY 14472 (US)**

(74) Vertreter: **Franzen, Peter et al**
**Heidelberger Druckmaschinen AG,**
**Kurfürsten-Anlage 52-60**
**69115 Heidelberg (DE)**

(54) **Verfahren zum digitalen Drucken von zusammengesetzten Dokumenten**

(57) Bei einem Verfahren zum digitalen Drucken zusammengesetzter Dokumente werden die Seiten im Dokument, die ein gemeinsames Attribut aufweisen, in einer digitalen Druckvorrichtung (10) gruppiert. Die Kennungselemente, z. B. in Form von Metatags, werden in der elektronischen Version des Dokuments gespeichert, um die Seitengruppen zu definieren. Außerdem wird das Kennungselement einer Seitengruppe einem Drucker (20, 22, 24) zugeordnet. Auf Anweisung eines Druckereiangestellten druckt die Vorrichtung (10) die Seiten, die zu einer angegebenen Gruppe gehören, an dem zugeordneten Drucker (20, 22, 24).

FIG. 1

EP 1 211 099 A2

**Beschreibung**

Die vorliegende Erfindung betrifft den Bereich des Digitaldrucks und insbesondere Verfahren zum digitalen Drucken zusammengesetzter Dokumente.

Der Digitaldruck verändert die Druckindustrie. Diese Technik bietet einem Kunden die Möglichkeit, eine elektronische Version eines Dokuments zu erstellen. Diese wird dann zur abschließenden Formatierung, zum Drucken und Zusammenfügen auf einem gewählten Drucker an die Druckerei geschickt. Digitale Druckverfahren sind sowohl für den Kunden als auch für die Angestellten der Druckerei von Vorteil: Der Kunde hat einerseits größeren Einfluss darauf, wie das fertige Produkt aussehen soll, da seine elektronische Version seine Vorstellungen genau wiedergibt, und der Angestellte in der Druckerei verbringt andererseits weniger Zeit mit der Formatierung des Dokuments, da ihm die Vorstellung des Kunden vom Endprodukt sofort deutlich wird, und er eine korrigierte elektronische Version des Dokuments an den Kunden schicken kann, damit dieser sie überprüft und sein Einverständnis erklärt. So können der Kunde und der Fachmann das Dokument vor dem eigentlichen Druckvorgang anhand einer beiden vorliegenden elektronischen Version gemeinsam überarbeiten.

In der Regel schickt der Kunde seinen Auftrag in Teilsendungen, oder er erstellt ein zusammenhängendes elektronisches Dokument mit Hilfe der bekannten Dokumenterstellungssoftware, z. B. mit "Acrobat" von Adobe Systems Inc. in Palo Alto, Kalifornien. Diese Software ermöglicht es dem Kunden, Elemente des Dokuments aus Textdateien, Bilddateien und sonstigen Dateien anderer Computerprogramme zu einem zusammenhängenden Dokument zusammenzustellen. Ein Dokument kann z. B. zu druckenden Text in einer bestimmten Schriftart aus einer Datei eines Textverarbeitungsprogramms, ein als Grafikdatei gespeichertes Bitmap-Bild und eine Datei eines Vorlagenprogramms enthalten. Die Software zur Erstellung eines druckfertigen Dokuments erzeugt in der Regel eine WYSIWYG-Wiedergabe ("What you see is what you get" was soviel bedeutet, dass das dem Bediener auf dem Bildschirm angezeigte Bild dem mit einer Druckvorrichtung erstellten Reproduktion des Bildes entspricht) des zu druckenden Dokuments auf einem Computerbildschirm. Diese Software fügt die Inhalte der Dateien zu einem Dokument zusammen, ermöglicht eine Gestaltung des Layouts (z. B. der Größenverhältnisse und der Kombination der einzelnen Elemente auf der Seite), gibt das Layout auf dem Bildschirm wieder und erzeugt ein zusammengesetztes elektronisches Dokument, das gespeichert und übertragen werden kann. Aktionen zum Editieren und Umstellen der Elemente können sofort auf dem Bildschirm angezeigt werden. Auf diese Weise hat der Kunde Einfluss auf den Inhalt und das Layout des Dokuments, während die elektronische Version erstellt wird, und wird dabei nicht durch Überlegungen bezüglich der verfügbaren Drucker und dem zu verwendenden Medium beeinträchtigt.

Der Angestellte in der Druckerei ist für die Erstellung eines fertigen, zusammenhängenden, druckfertigen Dokuments zuständig. Wenn der Kunde seinen Druckauftrag in Teilsendungen oder separaten Dateien an die Druckerei schickt, fügt sie in der Regel ein Angestellter in der Druckerei zu einem kohärenten Dokument in einer WYSIWYG-Datei zusammen, damit sie überprüft werden kann. Alternativ besteht natürlich ebenfalls die Möglichkeit, dass der Kunde seinen Druckauftrag bereits in Form einer WYSIWYG-Datei an die Druckerei schickt.

Der Kunde kann die Möglichkeiten der WYSIWYG-Software voll ausschöpfen und Elemente unterschiedlichster Formate zu einem zusammengesetzten Dokument verbinden. Er kann z. B. Text, schwarz-weiße Grafiken mit niedriger Auflösung und Grafiken mit hoher Auflösung zu einem zusammengesetzten Dokument kombinieren. Selbst eine einzige Seite eines zusammengesetzten Dokuments kann unterschiedliche Formate enthalten. Außerdem kann es sein, dass verschiedene Seiten auf unterschiedlichen Bedruckstoffen gedruckt werden sollen, wie es z. B. bei Registerblättern und Abschnittstrennseiten der Fall ist, die auf Papier in unterschiedlichen Farben oder unterschiedlicher Textur gedruckt werden sollen. Daher muss der Druckereiangestellte den Inhalt der elektronischen Version des Dokuments genauestens unter die Lupe nehmen, um zu entscheiden, wie die unterschiedlichen Formate und Medien am besten gedruckt werden können.

Kein Drucker kann effizient alle Formate oder Medien verarbeiten. Es ist z. B. ineffizient und u. U. aus Kostengründen unvertretbar, Text und schwarzweiße Grafiken oder Bilder in niedriger Auflösung auf einem hochauflösenden Farbdrucker zu drucken. Daher ist die übliche Vorgehensweise in der Regel, dass der Druckereiangestellte das zusammengesetzte Dokument in separate Dateien aufteilt, die jeweils an den für die Formatierung der Datei und das in der Datei spezifizierte Medium geeigneten Drucker gesendet wird. Der Druckereiangestellte passt den Inhalt jeder Datei so an, dass sie den Eigenschaften des zugeordneten Druckers entspricht, und druckt die Dateien an dem jeweiligen Drucker. Ein Drucker kann z. B. in optimaler Weise acht Textseiten im Quartformat drucken, d. h. vier Dokumentseiten auf jeder Seite eines Papierbogens, die anschließend geschnitten und zu vier beidseitig bedruckten Blättern gebunden werden. Durch den Einsatz dieses Druckers zum Drucken des Texts werden die Ressourcen der Druckerei wesentlich besser genutzt als es der Fall wäre, wenn jede Seite auf einem Farbdrucker gedruckt würde.

Nach dem Drucken gibt der Druckereiangestellte die einzelnen Druckaufträge an den Kunden weiter, der sie zum Endprodukt zusammenstellt, oder der Druckereiangestellte fügt sie selbst zusammen und stellt diesen Service dem Kunden in Rechnung. Wenn jedoch ein Kunde nach Betrachtung eines vom Druckereiangestellten erstellten Proofs des Dokuments Änderungen an der WYSIWYG-Datei vornehmen möchte, bevor er das Dokument akzeptiert, muss der Druckereiangestellte eine Kopie der ursprünglichen elektronischen Version erstellen, um die vom Kunden vorgenommenen Änderungen zu dokumentieren, und die Anpassungen an die Drucker beibehalten, damit er sie nicht zu einem späteren Zeitpunkt des Proof-Verfahrens erneut eingeben muss.

Daher ist es wünschenswert, die Integrität der elektronischen Version eines zusammengesetzten Dokuments in einer Weise aufrecht zu erhalten, die es dem Druckereiangestellten bei kreativen Veränderungen durch den Kunden sowie bei Veränderungen im Laufe des Proofings ermöglicht, Änderungen bezüglich des Formats, des Mediums und des Druckers in derselben elektronischen Version vorzunehmen. Durch Aufrechterhaltung der Integrität der elektronischen Version braucht der Druckereiangestellte die elektronische Version nicht physisch zu unterteilen, um die Teile an unterschiedliche Drucker zu schicken. Darüber hinaus erhält der Kunde die elektronische Version für das Proofing im selben WYSIWYG-Format, in dem er es an den Druckereiangestellten geschickt hat, und muss sich daher nicht mit den vom Druckereiangestellten vorgenommenen Anpassungen beschäftigen, durch die das zusammengesetzte Dokument auf verschiedenen Druckern gedruckt werden kann.

Weiterhin ist es wünschenswert, dass der Druckereiangestellte die Möglichkeit hat zu bestimmen, an welchem Drucker die verschiedenen Seiten oder Elemente des zusammengesetzten Dokuments gedruckt werden sollen, ohne dabei die Integrität der elektronischen Version zu beeinträchtigen.

Außerdem soll dem Druckereiangestellten die Möglichkeit gegeben werden, die Seiten oder Elemente, die für einen bestimmten Drucker bestimmt sind, zu Gruppen zusammenzufassen und sie zusammen zu drucken, ohne dass dabei Seiten oder Elemente, die für einen anderen Drucker bestimmt sind, mitgedruckt werden. Die für ein und denselben Drucker bestimmten Seiten müssen nicht aufeinander folgen. Das vorliegende Verfahren zum Durchsuchen des Dokuments nach Seiten einer Gruppe und zum separaten Drucken dieser Gruppen ist sehr effizient. Eine derartige Gruppierfunktion ermöglicht es dem Druckereiangestellten, die Ausgabe für jedes Format oder Medium einzeln zu überprüfen. Auf diese Weise können Druckaufträge effizient verarbeitet werden, wenn an einigen Druckern gerade ein anderer Druckauftrag gedruckt wird oder wenn einige Drucker nicht am Netz sind.

Darüber hinaus ist es wünschenswert, dass der Druckereiangestellte die Möglichkeit hat, für einen Drucker bestimmte Seiten oder Elemente an einen Ersatzdrucker umzuleiten. Eine solche Option kann nützlich sein, um dem Kunden einen Proofausdruck in niedrigerer Qualität als der des tatsächlichen Auflagendruckvorgangs zu drucken, um dem Kunden oder der Druckerei Kosten zu sparen.

Demgemäss liegt der Erfindung die Aufgabe zugrunde, ein Verfahren zum digitalen Drucken von zusammengesetzten Dokumenten bereitzustellen, das diese Möglichkeiten bietet. Diese Aufgabe wird durch ein Verfahren mit den Merkmalen des Anspruchs 1 und einer Vorrichtung mit den Merkmalen des Anspruchs 12 gelöst. Weitere Merkmale ergeben sich aus den Unteransprüchen und nebengeordneten Ansprüchen.

Ein Aspekt der Erfindung betrifft ein Verfahren zum Drucken einer Gruppe von Seiten eines zusammengesetzten Dokuments an einem Drucker. Das Verfahren umfasst das Durchsuchen einer elektronischen Version des Dokuments nach einem Kennungselement für die Gruppe von Seiten. Jede Seite des Dokuments ist einem entsprechenden Abschnitt der elektronischen Version des Dokuments zugeordnet. Ein Computer sammelt jeden Abschnitt der elektronischen Version des Dokuments, dem ein Kennungselement zugeordnet ist, zu einem Ausgabedatenstrom und leitet diesen zum Drucken an den Drucker.

Ein weiterer Aspekt der Erfindung bezieht sich auf ein Verfahren zum Gruppieren von Seiten eines zusammengesetzten Dokuments, um diese an einem Drucker zu drucken. Das Verfahren sieht vor, dass einer Gruppe von Seiten ein Kennungselement zugewiesen wird. Ein Computer verknüpft das Kennungselement mit Abschnitten einer elektronischen Version des Dokuments, die zu der Gruppe von Seiten gehören. Jede Seite des Dokuments ist einem entsprechenden Abschnitt der elektronischen Version des Dokuments zugeordnet.

Weiterhin wird gemäß der Erfindung eine digitale Druckvorrichtung bereitgestellt, die mindestens einen Drucker und einem mit diesem verbundenen Computer umfasst. Auf dem Computer läuft ein Programm ab, durch das alle mit einem Kennungselement versehenen Abschnitte einer elektronischen Version eines Dokuments zu einem Ausgabedatenstrom gesammelt werden. Jede Seite des Dokuments ist einem entsprechenden Abschnitt der elektronischen Version des Dokuments zugeordnet. Außerdem ordnet das Programm das Kennungselement einem der verfügbaren Drucker zu und leitet den Ausgabedatenstrom zum Drucken an den gewählten Drucker.

Ein weiterer Aspekt der Erfindung betrifft ein Verfahren zur Verwendung einer digitalen Druckvorrichtung. Das Verfahren sieht vor, dass eine Gruppe von Seiten eines Dokuments ausgewählt wird und dass dieser Gruppe von Seiten ein Kennungselement zugewiesen wird. Die Gruppe von Seiten wird anhand eines gemeinsamen Attributs bestimmt. Der Druckereiangestellte ordnet dem jeweiligen Kennungselement einen Drucker zu und gibt das zugeordnete Kennungselement bei Erhalt eines Druckbefehls in die digitale Druckvorrichtung ein. Auf diese Weise druckt der gewählte Drucker die Gruppe von Seiten, der das entsprechende Kennungselement zugeordnet ist.

Die Merkmale der vorliegenden Erfindung werden in der folgenden Beschreibung bevorzugter Ausführungsformen in Zusammenhang mit den beigefügten, nachfolgend aufgeführten Zeichnungen näher erläutert.

Es zeigen:

Fig. 1    ein Blockdiagramm einer Konfiguration einer digitalen Druckvorrichtung;

Fig. 2    ein Ablaufdiagramm eines Verfahrens zum Gruppieren von Seiten eines zusammengesetzten Dokuments in der in Fig. 1 gezeigten digitalen Druckvorrichtung;

Fig. 3    einen Quellcode zur Definition eines Seitenoptionsobjekts im Portable Document Format (PDF);

Fig. 4    ein Ablaufdiagramm eines Verfahrens zum Drucken einer Gruppe von Seiten eines zusammengesetzten Dokuments an einem Drucker der in Fig. 1 gezeigten digitalen Druckvorrichtung; und

Fig. 5    ein Ablaufdiagramm eines Verfahrens, bei dem die in Fig. 1 gezeigte digitale Druckvorrichtung verwendet wird.

Der Digitaldruck erfordert die Erstellung einer elektronischen Version eines zusammengesetzten Dokuments durch einen Druckereiangestellten, bevor der eigentliche Druckvorgang erfolgen kann. Die elektronische Version des Dokuments ist in der Regel eine computerlesbare Datei in einer Seitenbeschreibungssprache (Page Description Language PDL). PDL-Dateien enthalten Befehle im Format des American Standard Code for Information Interchange (ASCII). Das Speichern eines Dokuments als eine PDL-Datei hat den Vorteil, dass eine PDL-Datei in der Regel wesentlich kleiner als eine Bitmap-Datei ist. Der Drucker liest die PDL-Datei und führt entsprechend den in der PDL-Datei enthaltenen Anweisungen Druckfunktionen aus. Das Weiterleiten von Anweisungen an den Drucker im ASCII-Code ist effizienter als das Erstellen eines Bitmap-Bilds des Dokuments und das Weiterleiten des Bitmap-Bilds an den Drucker. Zum Beispiel ist es effizienter, an den Drucker ein paar ASCII-Zeichen zu schicken, die die Anweisung enthalten, er soll die Zeichenfolge "PDF" im Schriftgrad 24 in der Schriftart Times New Roman drucken, als ein Bitmap-Bild der Zeichenfolge mit einer Auflösung von 600 dpi zu erstellen und das Bitmap-Bild an den Drucker zu schicken. Mögliche PDL-Dateiformate sind z. B. das Portable Document Format (PDF) und das PostScript-Format von Adobe Systems.

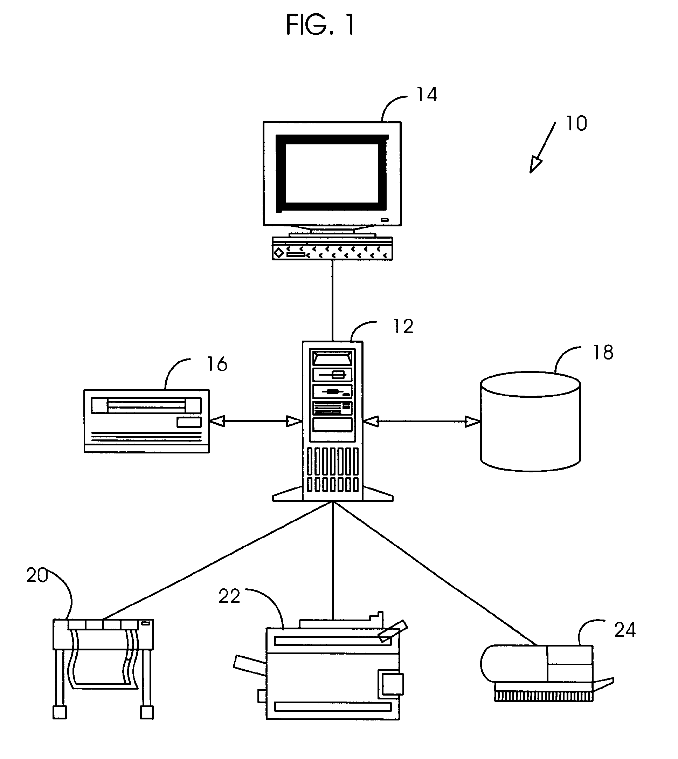

PDL-Dateien werden in der Regel auf einem computerlesbaren Medium gespeichert. Ein Computer, der ein Druckdokument-Managementsystemprogramm umfasst, kann auf sie zugreifen. Fig. 1 ist ein Blockdiagramm einer digitalen Druckvorrichtung 10. Ein Druckereiangestellter formatiert ein Dokument, indem er eine elektronische Version des Dokuments auf einem Computer 12 verändert, der über das Druckdokument-Managementsystemprogramm verfügt. Der Druckereiangestellte sieht die am Dokument vorgenommenen Veränderungen auf einem Computerbildschirm 14, der eine WYSIWYG-Wiedergabe des Dokuments liefert. Die elektronische Version des Dokuments kann mittels eines bekannten tragbaren Mediumslaufwerks 16, z. B. einem CD-ROM-Laufwerk, einem Diskettenlaufwerk oder einem Ziplaufwerk von einem tragbaren, computerlesbaren Medium ausgelesen oder auf diesem aufgezeichnet werden. Der Kunde kann dem Druckereiangestellten z. B. eine PDF-Datei auf einer CD-ROM übergeben, die der Druckereiangestellte in einem CD-ROM-Laufwerk lädt, um die Datei in einem Speicher des Computers 12 zu speichern. Nach dem Formatieren des Dokuments mit Hilfe der Druckdokument-Managementsystemsoftware kann der Druckereiangestellte die veränderte PDF-Datei auf einer anderen CD-ROM im CD-ROM-Laufwerk speichern und diese zur Überprüfung dem Kunden übergeben. Außerdem kann der Druckereiangestellte die elektronische Version auf einem computerlesbaren Speichermedium 18, z. B. einem Festplattenlaufwerk oder einem Bandlaufwerk, archivieren.

Wenn das Dokument gedruckt werden soll, gibt der Druckereiangestellte dem Computer 12 die Anweisung, einen Teil der PDL-Datei oder die gesamte PDL-Datei an einen oder mehrere der Drucker 20, 22, 24 zu schicken. Jeder Drucker 20, 22, 24 verarbeitet die erhaltenen PDL-Anweisungen und druckt eine Seite oder mehrere Seiten des Dokuments. Die vorliegende Erfindung ist jedoch nicht auf die in Fig. 1 gezeigten Geräte und deren Anordnung beschränkt. Es können auch andere Geräte und Anordnungen verwendet werden. Die elektronischen Versionen der Dokumente müssen auch nicht im PDL-Format vorliegen und müssen nicht auf CD-ROM, Diskette oder Festplatte gespeichert sein. Es sind viele andere Formate und Speichermedien zum Speichern des Dokuments in elektronischer Form möglich, z. B. ein grafisches Format, und die vorliegende Erfindung ist nicht auf die hier beschriebenen Formate und Medien beschränkt.

Eine Betriebsumgebung für den Computer 12, die Drucker 20, 22, 24 und andere erfindungsgemäße Geräte umfassen ein Prozessorsystem mit mindestens einer (nicht gezeigten) zentralen Prozessoreinheit (Central Processing Unit CPU) und einem (nicht gezeigten) Speichersystem. Eine CPU steuert vorzugsweise den Betrieb des Computers 12. In Übereinstimmung mit der üblichen Vorgehensweise von Computerprogrammierern werden die hier beschriebenen bevorzugten Verfahren, sofern nicht anders vermerkt, anhand von Vorgängen und symbolischen Darstellungen von Betriebsabläufen beschrieben, die im Prozessorsystem durchgeführt werden. Die CPU gibt den Druckern u.a. die Anweisung, Schriftarten zu laden, Diagnosen zu erstellen und PDL-Dateien zum Drucken zu verarbeiten. Die CPU kann auch den Speicher des Computers 12 anweisen, Daten, z. B. PDL-Dateien, von dem tragbaren Mediengerät 16 oder dem computerlesbaren Speichermedium 18 zu lesen oder auf diesen aufzuzeichnen. Eine mögliche CPU, mittels derer die bevorzugten Verfahren durchgeführt werden können und die Bestandteil der bevorzugten Ausführungsformen der Vorrichtung sein können, sind die Prozessoren der x86-Serie von Intel Corporation, Santa Clara, Kalifornien. Die vorliegende Erfindung ist jedoch nicht auf diese Prozessorreihe beschränkt und funktioniert auch mit anderen Prozessoren.

Die Vorgänge und symbolisch dargestellten Betriebsabläufe umfassen die Manipulation elektrischer Signale durch die CPU. Die elektrischen Signale entsprechen Datenbits, die eine Transformation oder Reduktion der Darstellung des elektrischen Signals bewirken. Der Computer 12, die Drucker 20, 22, 24 und andere Geräte verfügen an Speicherplätzen in ihrem jeweiligen Speichersystem über Datenbits, um den Betrieb ihrer CPU zu rekonfigurieren oder auf andere Weise zu verändern und andere Signale zu verarbeiten. Die Speicherplätze, z. B. ein Random Access Memory (RAM), sind physikalische Orte, die je nach Art des eingesetzten Speichers bestimmte den Datenbits entsprechende elektrische, magnetische oder optische Eigenschaften haben.

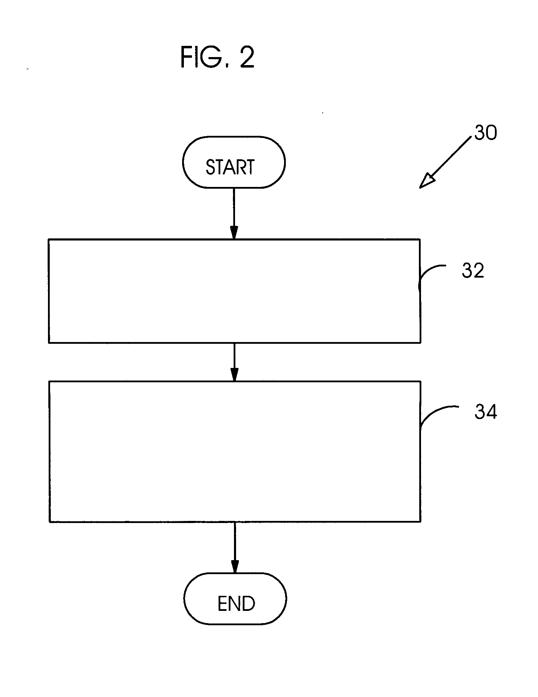

Fig. 2 ist ein Ablaufdiagramm eines Verfahrens 30 zum Gruppieren von Seiten eines zusammengesetzten Dokuments, um dieses auf einem Drucker zu drucken. Das Verfahren umfasst das Zuweisen eines Kennungselements zu einer Gruppe von Seiten in einem ersten Schritt 32. Im Schritt 34 wird das Kennungselement mit Abschnitten einer elektronischen Version des Dokuments verknüpft, die der Gruppe von Seiten entsprechen. Jede Seite des Dokuments ist mit einem entsprechenden Abschnitt der elektronischen Version des Dokuments verknüpft. Auf diese Weise kann der Druckereiangestellte den Computer 12 anweisen, die elektronische Version des zusammengesetzten Dokuments zu verändern, so dass der Computer 12 später ermitteln kann, welche Seiten zu einer Gruppe mit einem bestimmten Kennungselement gehören.

Der Druckereiangestellte kann z. B. bestimmen, dass eine Gruppe von Seiten auf einem hochauflösenden Farbdrucker gedruckt werden muss, da die Seiten in der Gruppe insofern ein gemeinsames Attribut haben, als sie detaillierte Farbgrafiken enthalten. Andere Seiten des Dokuments können dagegen auf einem Schwarzweißdrucker mit mittlerer Auflösung gedruckt werden, da sie nur Fließtext enthalten. Demgemäss würde der Druckereiangestellte die Farbseiten zu einer Gruppe zusammenfassen, indem er dieser Gruppe ein Kennungselement zuweist. Das Kennungselement kann als eine Textfolge ausgebildet sein (z. B. "hi-res color") oder die Form eines Parameters haben, der intern von der Druckdokument-Managementsoftware erkannt wird. Der Druckereiangestellte weist dieses Kennungselement den Seiten der elektronischen Version des Dokuments zu. In der Regel wird das Kennungselement in der elektronischen Version des Dokuments gespeichert, die wiederum im tragbaren Medienlaufwerk 16, im RAM des Computers 12 oder auf dem computerlesbaren Speichermedium 18 gespeichert werden kann.

Gemäß einer bevorzugten Ausführungsform liegt die elektronische Version des Dokuments im PDL-Format vor, z. B. im PDF oder in Form einer PostScript-Datei. Im Verknüpfungsschritt 34 wird das Kennungselement in der PDL-Datei gespeichert. Eine PostScript-Datei enthält aufeinanderfolgende Abschnitte, die mit einem Abschnitt für die erste Seite beginnen und mit einem Abschnitt für die letzte Seite enden. Jeder Abschnitt kann Anweisungen zur Identifizierung der Seite annehmen, die nicht auf dem Computerbildschirm 14 wiedergegeben und nicht vom Drucker 20, 22, 24 ausgedruckt werden. Derartige Anweisungen werden als "Metatags" bezeichnet. Gemäß dem Verfahren 30 kann das Kennungselement als ein Metatag in jedem Abschnitt der PostScript-Datei gespeichert werden, der einer Seite der Gruppe entspricht.

Das PDL-Format ist vorzugsweise PDF. Eine PostScript-Datei wird sequenziell verarbeitet, um eine bestimmte Seite zu finden. Daher muss der Computer 12 alle Seiten der PostScript-Datei verarbeiten, bevor die gesuchte Seite der Gruppe gefunden wird. Das PDF bietet eine effizientere Verarbeitung, da es dem Computer 12 ermöglicht, an bestimmte Stellen in der PDF-Datei, an denen eine gesuchte Seite beginnt, zu springen. Eine PDF-Datei enthält einen separaten Abschnitt, der ein Seitenoptionsobjekt (page options object) enthält, wie es Fachleuten für Digitaldruck bekannt ist. Das Objekt enthält die Position eines jeden Abschnitts, der einer bestimmten Seite entspricht. Der Computer 12 kann also den Seitenoptionsobjektbereich der Datei untersuchen, die Position eines bestimmten Abschnitts der PDF-Datei bestimmen und direkt an diese Position gehen, ohne die dazwischen liegenden Abschnitte zu verarbeiten.

Gemäß einer bevorzugten Ausführungsform speichert der Computer 12 das Kennungselement in einem Objektbereich des PDF-Dokuments, z. B. in dem Bereich, der dem Seitenoptionsobjekt entspricht.

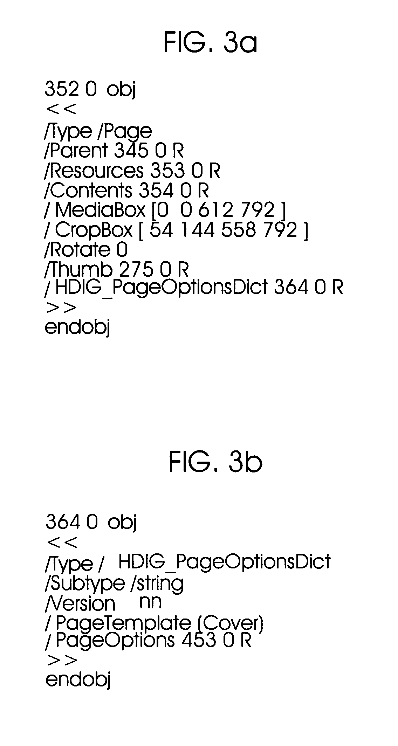

Fig. 3 ist ein Quellcode zur Definition eines Seitenoptionsobjekts im Portable Document Format. Fig. 3a definiert ein Seitenwurzelobjekt (Page Root Object), wie es dem Fachmann bekannt ist. Dieses Seitenwurzelobjekt ist ein Seitenoptionsverzeichnisobjekt (Page Options Dictionary Object) in Form des Ausdrucks 1:

/HDIG_PageOptionsDict 364 0 R        (1)

Der Computer 12 speichert das Seitenoptionsverzeichnisobjekt als Objekt Nr. 364 aus der Definition in Ausdruck 1. Fig. 3b definiert das Seitenoptionsverzeichnisobjekt von Ausdruck 1. Das Seitenoptionsverzeichnisobjekt enthält ein Seitenoptionsobjekt in Form des Ausdrucks 2:

/PageOptions 453 0 R        (2)

Der Computer 2 speichert das Seitenoptionsobjekt als Objekt Nr. 453 aus der Definition in Ausdruck 2. Der Computer 12 speichert das Kennungselement der Gruppe und die Seiten der Gruppe zusammen im Seitenoptionsobjekt. Das Kennungselement der Gruppe kann ein Metatag für die Seiten der Gruppe sein. Auf diese Weise kann der Computer 12 die Position der den Seiten der Gruppe entsprechenden Abschnitte der elektronischen Version leicht finden, indem die Seitenoptionsobjekte betrachtet werden und die Positionen mit dem Kennungselement korreliert werden. Die bevorzugten Ausführungsbeispiele sind jedoch nicht auf die Definitionen in Fig. 3 oder die Objektformen in Ausdruck 1 und 2 beschränkt. Es sind auch andere Formen und Definitionen der Objekte möglich.

In einer alternativen bevorzugten Ausführungsform speichert der Computer 12 das Gruppen-Kennungselement in den Abschnitten der elektronischen Version, die der Gruppe von Seiten entsprechen. Der Computer 12 kann z. B. das Kennungselement in einem Metatag am Anfang jedes Abschnitts speichern. Ein Beispiel eines Metatags für eine PDF-Datei kann z. B. die Form von Ausdruck 3 haben:

<group>hi-res_color<\group>        (3)

Dies gibt an, dass alle Abschnitte der elektronischen Version des zusammengesetzten Dokuments, die diesen Metatag enthalten, auf einem ausgewählten Drucker gedruckt werden, wenn der Druckereiangestellte die Anweisung gibt, die Gruppe "hi-res-color" (hochauflösende Farbe, s. o.) zu drucken.

Eine beliebige Seite des zusammengesetzten Dokuments kann zu mehr als einer Gruppe von Seiten gehören. Seitengruppen innerhalb eines zusammengesetzten Dokuments müssen einander nicht gegenseitig ausschließen. Eine Seite, die sowohl farbige Grafiken als auch Fließtext enthält, kann z. B. zu Seitengruppen gehören, die für jedes dieser Seitenattribute geeignet sind. Wenn der Druckereiangestellte bestimmt, dass nur die Seiten mit Fließtext gedruckt werden sollen, um z. B. eine Rechtschreibeprüfung durchzuführen, oder dass nur die Seiten mit farbigen Grafiken gedruckt werden sollen, um die Farbqualität zu überprüfen, so wird eine Seite, die zu beiden Gruppen gehört, in beiden Fällen gedruckt. Außerdem können Seiten, die zu keiner identifizierten Gruppe gehören, eine "neutrale" Seitengruppe bilden. Dies ermöglicht es dem Druckereiangestellten, die Seiten einer neutralen Seitengruppe auf einem Standarddrucker 20, 22, 24 zu drucken.

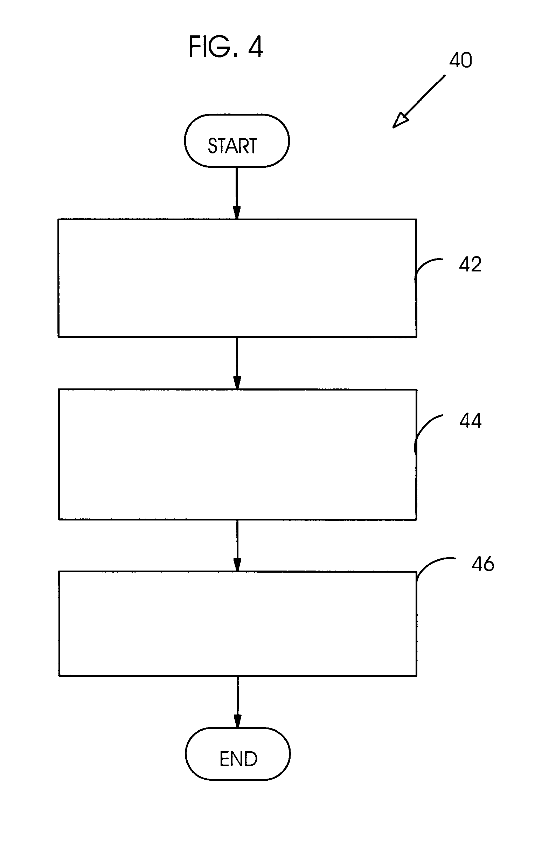

Fig. 4 ist ein Ablaufdiagramm eines Verfahrens 40 zum Drucken einer Gruppe von Seiten eines zusammengesetzten Dokuments auf einem Drucker 20, 22, 24. In einem Schritt 42 wird eine elektronische Version eines Dokuments nach einem Kennungselement der Seitengruppe durchsucht. Jede Seite des Dokuments ist mit einem entsprechenden Abschnitt der elektronischen Version des Dokuments verknüpft. In einem Schritt 44 wird jeder Abschnitt der elektronischen Version, dem das Kennungselement zugewiesen ist, zu einem Ausgabedatenstrom zusammengeführt. Der Ausgabedatenstrom wird in einem Schritt 46 an den Drucker weitergeleitet. Auf diese Weise kann der Druckereiangestellte den Computer 12 anweisen, nur die Gruppe von Seiten auf dem Drucker 20, 22, 24 zu drucken, welche das jeweilige Kennungselement aufweisen.

Es ist z. B. möglich, nur die Seiten zu drucken, die zur Gruppe mit hochauflösenden Farben ("hi-res color") gehören. In diesem Fall durchsucht der Computer 12 die elektronische Version des zusammengesetzten Dokuments, um die den Seiten der Gruppe entsprechenden Abschnitte zu extrahieren. Gemäß einer bevorzugten Ausführungsform wird das Kennungselement in jedem Abschnitt gespeichert, der einer Seite der Gruppe entspricht. Der Computer 12 kann z. B. die elektronische Version der PostScript-Datei sequenziell nach einem Metatag in Form des Ausdrucks 3 durchsuchen. Nach Auffinden eines Metatags sammelt der Computer 12 die Abschnitte, die den Metatag aufweisen und durchsucht weiter die elektronische Version des Dokuments, bis jeder Abschnitt mit Metatag aufgefunden wurde. Nach diesem Vorgang oder während dieses Vorgangs leitet der Computer 12 diese Abschnitte in bekannter Weise an den Drucker 20, 22, 24 in Form eines Ausgabedatenstroms.

Gemäß einem alternativen Ausführungsbeispiel kann das Kennungselement in einem separaten Abschnitt der elektronischen Version des zusammengesetzten Dokuments gespeichert werden. Es kann z. B. im Seitenoptionsobjekt einer PDF-Datei enthalten sein, wie es in Fig. 3 und Ausdruck 2 definiert ist. Der Computer 12 sucht das Objekt und extrahiert die Position der Abschnitte der PDF-Datei, die den Seiten der Gruppe entsprechen. Der Computer 12 sammelt alle Abschnitte, die im Objekt spezifiziert werden, in einem Ausgabedatenstrom. Danach oder währenddessen leitet der Computer 12 den Ausgabedatenstrom auf bekannte Weise an den Drucker 20, 22, 24.

Wenn der Druckereiangestellte im Schritt 32 des Verfahrens 30 der Gruppe von Seiten das Kennungselement zuweist, kann er den Drucker 20, 22, 24 wählen, an dem die Gruppe von Seiten gedruckt werden soll. Wenn z. B. einer Seitengruppe das Kennungselement "hi-res color" zugewiesen wird, kann ein Drucker 20, 22, 24 für hochauflösende farbige Grafiken gewählt werden. Eine derartige Auswahl kann dadurch getroffen werden, dass eine Adresse oder eine andere Kennung eingegeben wird, welche den Computer 12 anweisen, die entsprechenden Abschnitte in Übereinstimmung mit den Eingabeerfordernissen des Druckers 20, 22, 24 zu formatieren und den Ausgabedatenstrom an einen Ausgang zu leiten, mit dem der entsprechende Drucker 20, 22, 24 verbunden ist. Mittels bekannter Verfahren kann bei der Ansicht des Dokuments auf dem Computerbildschirm 14 an der grafischen Benutzerschnittstelle (graphical user interface GUI) ein Pull-down-Menü aufgerufen werden, welches dem Bediener das Erstellen einer neuen Seitengruppe ermöglicht. Der Computer 12 kann den Bediener in einer Dialogbox auffordern, ein Kennungselement für die Seitengruppe einzugeben. Gleichzeitig kann der Bediener aufgefordert werden, den Drucker 20, 22, 24 zu wählen, an dem die das entsprechende Kennungselement aufweisenden Seiten gedruckt werden sollen. Auf diese Weise ordnet der Druckereiangestellte beim Erzeugen der Seitengruppe das Kennungselement dem Drucker 20, 22, 24 zu.

Alternativ kann der Computer 12 jedoch die Aufforderung zur Eingabe des zum Drucken der Seitengruppe zu verwendenden Druckers 20, 22, 24 zu einem anderen Zeitpunkt ausgeben. Der Computer 12 kann z. B. den Bediener auffordern, ein Kennungselement für eine Seitengruppe einzugeben und anzugeben, welche Seiten zu dieser Gruppe gehören, ohne den Bediener bereits zu diesem Zeitpunkt der Bearbeitung des zusammengesetzten Dokuments aufzufordern, dem Kennungselement einen Drucker 20, 22, 24 zuzuweisen. Zu einem späteren Zeitpunkt im Laufe des digitalen Druckprozesses trifft der Druckereiangestellte möglicherweise die Entscheidung, die Seitengruppe zu drucken. Der Computer 12 kann den Druckereiangestellten auffordern, das Kennungselement für die Gruppe anzugeben und einen Drucker 20, 22, 24 auszuwählen. Der Druckereiangestellte kann z. B. entscheiden, dass er die Gruppe "hi-res color" an einem Farbdrucker 20, 22, 24 mit hoher Auflösung drucken möchte, um die gewünschte Anzahl von Ausdrucken der Seitengruppe in der gewünschten Qualität zu erhalten. Alternativ kann er auch beschließen, dieselbe Gruppe an einem Schwarzweiß-Drucker 20, 22, 24 mit niedriger Auflösung zu drucken, um billige Ausdrucke in Proofqualität zu erhalten.

Während des Betriebs kann der Druckereiangestellte mehrere Seitengruppen gleichzeitig auswählen, um sie drucken zu lassen, indem er die Kennungselemente für die jeweiligen Seitengruppen in den Computer 12 eingibt. Dies kann mit Hilfe der GUI des Computers 12 erfolgen, welche den Druckereiangestellten mittels eines Dialogfelds oder eines Auswahlmenüs zur Eingabe von Kennungselementen auffordert. Außerdem fordert der Computer 12 den Druckereiangestellten auf, jede Seitengruppe einem Drucker 20, 22, 24 zuzuweisen. Danach sammelt der Computer 12 die Abschnitte der elektronischen Version des Dokuments, welche das betreffende Kennungselement aufweisen, zu einem Ausgabedatenstrom des jeweiligen Kennungselements. Jeder Ausgabedatenstrom wird dem geeigneten Drucker 20, 22, 24 zugewiesen und zum Drucken an diesen geleitet, da sowohl der Ausgabedatenstrom als auch der Drucker 20, 22, 24 mit dem Kennungselement verknüpft sind. Der jeweilige Drucker 20, 22, 24 verarbeitet den Ausgabedatenstrom und druckt die Seitengruppe. Auf diese Weise ist die digitale Druckvorrichtung in der Lage, gleichzeitig mehrere Seitengruppen zu drucken.

Außerdem hat der Druckereiangestellte die Möglichkeit, eine Seitengruppe zu wählen, um sie an einem Drucker 20, 22, 24 drucken zu lassen, während er den Drucker 20, 22, 24 anweist, die zu anderen Seitengruppen gehörenden Seiten durch Einfügeseiten zu ersetzen. Diese Möglichkeit ist hilfreich, wenn ein zusammengesetztes Dokument Abschnitte enthält, die an einem anderen Drucker 20, 22, 24 gedruckt werden, aber gemeinsam weiterverarbeitet werden müssen. Bei einem Dokument, das sowohl eine Seitengruppe mit farbigen Grafiken als auch eine Seitengruppe mit reinem Fließtext enthält, kann der Druckereiangestellte z. B. zuerst die Seitengruppe mit den farbigen Grafiken an einem Farbdrucker 20, 22, 24 in der gewünschten Qualität drucken. Danach kann der Druckereiangestellte den Computer 12 anweisen, die Seiten der Gruppe mit reinem Fließtext an einem Textdrucker 20, 22, 24 zu drukken und die Seiten der Gruppe mit farbigen Grafiken durch eine Einfügeseite zu ersetzen. Auf diese Weise weist der Computer 12 den Textdrucker 20, 22, 24 an, während des Duckens der Textseiten die Farbseiten an der korrekten Stelle des Dokuments einzufügen. Anschließend kann der Druckereiangestellte die zusammengefügten Farb- und Textseiten als vollständiges Dokument weiter verarbeiten lassen.

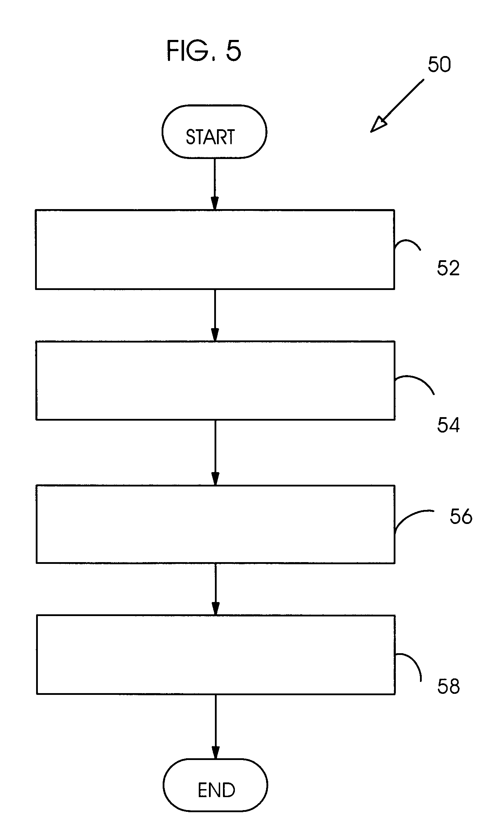

Fig. 5 zeigt ein Ablaufdiagramm eines Verfahrens 50 zur Verwendung einer digitalen Druckvorrichtung 10. In einem Schritt 52 wählt ein Bediener eine Gruppe von Seiten eines Dokuments anhand eines gemeinsamen Attributs. Danach weist der Bediener der Seitengruppe in einem Schritt 54 ein Kennungselement zu. Der Bediener ordnet dem zugewiesenen Kennungselement in einem Schritt 56 einen Drucker 20, 22, 24 zu. In einem Schritt 58 gibt der Bediener als Reaktion auf eine Druckaufforderung das zugewiesene Kennungselement in die digitale Druckvorrichtung 10 ein. Daraufhin druckt der gewählte Drucker 20, 22, 24 die Seitengruppe mit dem entsprechenden Kennungselement.

Der Bediener kann z. B. mittels eines auf dem Computerbildschirm 14 der GUI erscheinenden Pulldown-Menüs die Auswahl einer Seitengruppe initiieren. Mittels eines Dialogfelds der GUI fordert der Computer 12 den Bediener auf, die zu der Gruppe gehörenden Seiten auszuwählen. Danach kann der Computer 12 den Bediener auffordern, der Gruppe ein Kennungselement zuzuweisen, indem er das Kennungselement in das Dialogfeld eintippt. Gleichzeitig kann der Bediener im selben Dialogfeld dem Kennungselement einen Drucker 20, 22, 24 zuweisen. Er kann diesen Vorgang jedoch auch zu einem späteren Zeitpunkt mittels eines Pull-down-Menüs auslösen. Der Computer 12 reagiert, indem auf dem Computerbildschirm 14 ein Dialogfeld erscheint, mittels dessen der Bediener dem Kennungselement einen Drucker 20, 22, 24 zuordnet.

Sobald der Bediener bereit ist, den Druckvorgang zu starten, wird er durch die digitale Druckvorrichtung 10 aufgefordert, das Kennungselement für die zu druckende Seitengruppe einzugeben. Diese Aufforderung durch die digitale Druckvorrichtung kann in Reaktion darauf erfolgen, dass der Bediener durch Aufrufen eines Pull-down-Menüs oder durch Anklicken eines Icons "Drucken" an der GUI signalisiert, dass er die Entscheidung getroffen hat, den Druckvorgang zu starten. Die Aufforderung kann in Form eines Dialogfelds erfolgen, das sich auf dem Computerbildschirm 14 öffnet. Alternativ kann die Aufforderung in Form eines hörbaren Signals des Druckers 20, 22, 24 erfolgen. Nach der Eingabe des Kennungselements für die gewählte Gruppe druckt die digitale Druckvorrichtung 10 die Seiten der Gruppe auf dem zugewiesenen Drucker 20, 22, 24. Das Verfahren 50 ist jedoch nicht auf die beschriebenen, an der GUI des Computers 12 ablaufenden Vorgänge beschränkt. Es sind auch andere Vorgänge zum Wählen, Zuweisen, Zuordnen und Eingeben denkbar.

Die hier beschriebenen Programme, Prozesse, Verfahren, Vorrichtungen und Geräte sind, sofern nichts anderes vermerkt ist, nicht auf eine bestimmte Art von Computergerät (Hardware oder Software) bezogen oder beschränkt. Verschiedene Arten von Allzweckoder Spezialcomputern sind in Zusammenhang mit den hier beschriebenen Vorgängen und zur Ausführung der hier beschriebenen Vorgänge verwendbar.

In Anbetracht der großen Vielfalt von Ausführungsformen, auf welche die Prinzipien der Erfindung angewandt werden können, ist es selbstverständlich, dass die dargestellten Ausführungsformen nur als Beispiele zu betrachten sind und den Bereich der Erfindung nicht beschränken. Die im Ablaufdiagramm angegebenen Schritte können z. B. in einer anderen Reihenfolge als der beschriebenen ausgeführt werden. In den Blockdiagrammen können mehr oder weniger Elemente oder Komponenten verwendet werden.

Die Ansprüche sollen nicht als durch die beschriebene Reihenfolge oder durch die beschriebenen Elemente beschränkt betrachtet werden, sofern dies nicht explizit erwähnt ist. Alle Ausführungsformen, die dem Bereich und Grundgedanken der nachfolgenden Ansprüche und deren Äquivalente entsprechen, werden daher als die Erfindung beansprucht.

**Liste der Bezugszeichen**

| | |
|---|---|
| 10 | digitale Druckvorrichtung |
| 12 | Computer |
| 14 | Bildschirm |
| 16 | tragbares Laufwerk |
| 18 | computerlesbares Speichermedium |
| 20 | Drucker |
| 22 | Drucker |
| 24 | Drucker |
| 30 | Verfahren |
| 32 | Verfahrensschritt |
| 34 | Verfahrensschritt |
| 40 | Verfahren |
| 42 | Verfahrensschritt |
| 44 | Verfahrensschritt |
| 46 | Verfahrensschritt |
| 50 | Verfahren |
| 52 | Verfahrensschritt |
| 54 | Verfahrensschritt |
| 56 | Verfahrensschritt |
| 58 | Verfahrensschritt |

**Patentansprüche**

1.  Verfahren zum Drucken einer Gruppe von Seiten eines zusammengesetzten Dokuments auf einem Drucker (20, 22, 24) mit den folgenden Verfahrensschritten:

    Durchsuchen einer elektronischen Version des Dokuments nach einem Kennungselement der Gruppe von Seiten, wobei jede Seite des Dokuments mit einem entsprechenden Abschnitt der elektronischen Version des Dokuments verknüpft ist;
    Sammeln der Abschnitte der elektronischen Version, die mit dem Kennungselement verknüpft sind, zu einem Ausgabedatenstrom; und
    Weiterleiten des Ausgabedatenstroms an den Drucker (20, 22, 24) zum Drucken.

2.  Verfahren nach Anspruch 1,
    mit folgendem zusätzlichen Schritt:

    Auffordern zur Wahl des Druckers (20, 22, 24), auf dem die Seitengruppe gedruckt werden soll.

3.  Verfahren nach Anspruch 1,
    **dadurch gekennzeichnet,**
    **dass** das Kennungselement in einem separaten Abschnitt der elektronischen Version des Dokuments gespeichert wird und der separate Abschnitt Positionsinformationen für jeden Abschnitt der elektronischen Version des Dokuments enthält, welcher der Seitengruppe zugeordnet ist.

4. Verfahren nach Anspruch 1,
**dadurch gekennzeichnet,**
**dass** das Kennungselement in jedem Abschnitt der elektronischen Version des Dokuments gespeichert wird, welcher der Seitengruppe zugeordnet ist.

5. Verfahren nach Anspruch 1,
mit folgenden weiteren Schritten:

Durchsuchen der elektronischen Version des Dokuments nach einem weiteren Kennungselement für eine weitere Seitengruppe;
Richten eines Einfügebefehls an den Drucker (20, 22, 24) für jeden Abschnitt, der mit dem anderen Kennungselement versehen ist.

6. Verfahren zum Gruppieren von Seiten in einem zusammengesetzten Dokument, um dieses an einem Drucker (20, 22, 24) zu drucken, mit den folgenden Verfahrensschritten:

Zuweisen eines Kennungselements zu einer Gruppe von Seiten; und
Verknüpfen des Kennungselements mit Abschnitten der elektronischen Version des Dokuments, welche der Seitengruppe entsprechen, wobei jede Seite des Dokuments einem entsprechenden Abschnitt der elektronischen Version des Dokuments zugeordnet wird.

7. Verfahren nach Anspruch 6, wobei der Schritt des Verknüpfens das Speichern des Kennungselements in einem separaten Abschnitt der elektronischen Version des Dokuments umfasst, wobei der separate Abschnitt Positionsinformationen für die Abschnitte der elektronischen Version umfasst, die der Seitengruppe zugeordnet sind.

8. Verfahren nach Anspruch 6, wobei der Schritt des Verknüpfens das Speichern des Kennungselements in den Abschnitten der elektronischen Version des Dokuments umfasst, welche der Seitengruppe entsprechen.

9. Verfahren nach einem der Ansprüche 1 oder 6,
**dadurch gekennzeichnet,**
**dass** die elektronische Version des Dokuments in einer Seitenbeschreibungssprache vorliegt.

10. Verfahren nach Anspruch 9,
**dadurch gekennzeichnet,**
**dass** die Seitenbeschreibungssprache das Portable Document Format ist.

11. Verfahren nach Anspruch 9,

**dadurch gekennzeichnet,**
**dass** das Kennungselement als ein Metatag ausgebildet ist.

12. Digitale Druckvorrichtung (10) mit
mindestens einem Drucker (20, 22, 24); und
einem mit dem mindestens einen Drucker (20, 22, 24) verbundenen Computer (12), wobei der Computer (12) ein Programm durchführt, welches die folgenden Schritte umfasst:

Sammeln aller Abschnitte einer elektronischen Version eines Dokuments, welche ein Kennungselement aufweisen, zu einem Ausgabedatenstrom, wobei jede Seite des Dokuments mit einem entsprechenden Abschnitt der elektronischen Version verknüpft ist;
Zuordnen des Kennungselements zu einem der Drucker (20, 22, 24); und
Weiterleiten des Ausgabedatenstroms an den gewählten Drucker (20, 22, 24) zum Drucken.

13. Vorrichtung nach Anspruch 12,
**dadurch gekennzeichnet,**
**dass** das Programm als ein Plug-in zu einem Druckdokument-Managementsystem ausgebildet ist.

14. Verfahren zur Verwendung einer digitalen Druckvorrichtung (10) mit folgenden Verfahrensschritten:

Auswählen einer Seitengruppe eines Dokuments, wobei die Seitengruppe durch ein gemeinsames Attribut definiert ist;
Zuweisen eines Kennungselements zu der Seitengruppe;
Zuordnen eines Druckers (20, 22, 24) zu dem zugewiesenen Kennungselement; und
Eingeben des zugewiesenen Kennungselements in die digitale Druckvorrichtung (10) in Reaktion auf eine Druckaufforderung, wodurch der zugeordnete Drucker (20, 22, 24) die Seitengruppe mit dem zugewiesenen Kennungselement druckt.

15. Verfahren zum Drucken einer Gruppe von Seiten eines zusammengesetzten Dokuments an einem Drucker (20, 22, 24) mit folgenden Verfahrensschritten:

Suchen nach einem Kennungselement für die Seitengruppe in einem separaten Abschnitt einer elektronischen Version des Dokuments, wobei die elektronische Version des Dokuments in einem Portable Document Format vorliegt und jede Seite des Dokuments mit einem entsprechenden Abschnitt der elektronischen Version des Dokuments verknüpft ist, und wobei der separate Abschnitt Positionsinformationen für jeden Abschnitt der elektronischen Version des Dokuments enthält, welcher der Seitengruppe zugeordnet ist;

Sammeln aller Abschnitte der elektronischen Version des Dokuments, die das Kennungselement aufweisen, zu einem Ausgabedatenstrom; und

Weiterleiten des Ausgabedatenstroms an den Drucker (20, 22, 24) zum Drucken.

16. Verfahren zum Gruppieren von Seiten eines zusammengesetzten Dokuments zum Drucken an einem Drucker (20, 22, 24) mit den folgenden Verfahrensschritten:

Zuweisen eines Kennungselements zu einer Gruppe von Seiten; und

Speichern des Kennungselements in einem separaten Abschnitt einer elektronischen Version des Dokuments, wobei die elektronische Version des Dokuments in einem Portable Document Format vorliegt und jede Seite des Dokuments mit einem entsprechenden Abschnitt der elektronischen Version des Dokuments verknüpft ist, und wobei der separate Abschnitt Positionsinformationen für die Abschnitte der elektronischen Version des Dokuments enthält, welche der Seitengruppe entsprechen.

17. Computerlesbares Medium, auf dem Anweisungen gespeichert sind, welche bewirken, dass eine zentrale Prozessoreinheit das Verfahren nach einem der Ansprüche 1, 6, 15 oder 16 ausführt.

FIG. 1

# FIG. 2

START

30

32

34

END

## FIG. 3a

```
352 0  obj
<<
/Type /Page
/Parent 345 0 R
/Resources 353 0 R
/Contents 354 0 R
/ MediaBox [0  0 612 792 ]
/ CropBox [ 54 144 558 792 ]
/Rotate 0
/Thumb 275 0 R
/ HDIG_PageOptionsDict 364 0 R
>>
endobj
```

## FIG. 3b

```
364 0  obj
<<
/Type /  HDIG_PageOptionsDict
/Subtype /string
/Version   nn
/ PageTemplate (Cover)
/ PageOptions 453 0 R
>>
endobj
```

FIG. 4

40

START

42

44

46

END

# FIG. 5